# EUROPÄISCHE PATENTSCHRIFT

(11) **EP 2 550 697 B1**
(45) Veröffentlichungstag und Bekanntmachung des Hinweises auf die Patenterteilung: **16.04.2014**
(21) Anmeldenummer: 10793160.2
(22) Anmeldetag: 08.12.2010
(51) Int. Cl.: H01M 2/20, H01M 10/60

(54) **BATTERIE MIT EINER MEHRZAHL VON EINZELZELLEN**
BATTERY HAVING A PLURALITY OF SINGLE CELLS
BATTERIE COMPRENANT UNE PLURALITÉ D'ÉLÉMENTS INDIVIDUELS

(30) Priorität: 26.03.2010 DE 102010013023
(43) Veröffentlichungstag der Anmeldung: 30.01.2013
(73) Patentinhaber: Daimler AG, 70327 Stuttgart (DE)
(72) Erfinder: SCHRÖTER, Dirk, 71364 Winnenden (DE); MEINTSCHEL, Jens, 02994 Bernsdorf (DE); KAUFMANN, Rainer, 70597 Stuttgart (DE); LAMM, Arnold, 89275 Elchingen (DE); WARTHMANN, Wolfgang, 71384 Weinstadt (DE)
(74) Vertreter: JENSEN & SON
(86) Internationale Anmeldenummer: PCT/EP2010/007458
(87) Internationale Veröffentlichungsnummer: WO 2011/116804

(56) Entgegenhaltungen:
- WO-A2-2010/031856
- DE-A1-102008 034 867
- JP-A- 2009 170 258
- JP-A- 2009 238 654

## Beschreibung

Die Erfindung betrifft eine Batterie mit einer Mehrzahl von seriell und/oder parallel miteinander verschalteten Einzelzellen und zumindest einer polseitig auf den Einzelzellen angeordneten Kühlplatte, wobei Stromableiterfahnen elektrischer Pole der Einzelzellen thermisch mit der Kühlplatte gekoppelt und derart abgewinkelt sind, dass diese parallel zur Kühlplatte verlaufen.

Üblicherweise weist eine Batterie zur Anwendung in Kraftfahrzeugen, insbesondere in Kraftfahrzeugen mit einem Hybridantrieb, Elektroantrieb oder Brennstoffzellenfahrzeugen, einen Zellblock aus mehreren elektrisch in Reihe und/oder parallel geschalteten Batteriezellen, beispielsweise Lithium-lonen-Zellen, auf.

Die Batteriezellen müssen gekühlt werden, um die entstehende Verlustwärme abzuführen. Dazu wird eine Kühlvorrichtung eingesetzt, die mit den Batteriezellen thermisch verbunden ist.

Aus der DE 10 2010 013023 der Anmelderin ist eine Batterie, insbesondere eine Lithium-lonen-Batterie, mit einer Mehrzahl von seriell und/oder parallel miteinander verschalteten Einzelzellen und einer polseitig auf den Einzelzellen angeordneten Kühlplatte bekannt. Dabei sind Ableiterfahnen, auch als Stromableiterfahnen bezeichnet, von Polen der Einzelzellen thermisch an die Kühlplatte gekoppelt. Weiterhin sind die Ableiterfahnen derart abgewinkelt, dass diese parallel zur Kühlplatte formschlüssig und/oder kraftschlüssig angeordnet sind, wobei die Einzelzellen durch Verschweißung der Ableiterfahnen benachbarter Einzelzellen elektrisch miteinander verschaltet sind.

Der Erfindung liegt die Aufgabe zugrunde, eine Batterie mit verbesserter Kühlung und erhöhtem Schutz gegen elektrische Fehler, insbesondere Kurzschlüsse, anzugeben, welche in einfacher Weise herstellbar ist.

Die Aufgabe wird erfindungsgemäß mit einer Batterie gelöst, welche die im Anspruch 1 angegebenen Merkmale aufweist.

Vorteilhafte Ausgestaltungen der Erfindung sind Gegenstand der Unteransprüche.

Die Batterie umfasst eine Mehrzahl von seriell und/oder parallel miteinander verschalteten Einzelzellen und eine polseitig auf den Einzelzellen angeordneten Kühlplatte, wobei Stromableiterfahnen elektrischer Pole der Einzelzellen thermisch mit der Kühlplatte gekoppelt und derart abgewinkelt sind, dass diese parallel zur Kühlplatte verlaufen.

Erfindungsgemäß sind Stromableiterfahnen benachbarter Einzelzellen mittels Spannelementen kraft- und/oder formschlüssig elektrisch verschaltet und kraft- und/oder formschlüssig mit der Kühlplatte verpresst. Aus dieser gleichzeitigen Verwendung der Spannelemente zur elektrischen Verbindung der benachbarten Einzelzellen und zur Verpressung der Stromableiterfahnen mit der Kühlplatte resultiert in besonders vorteilhafter Weise eine Vereinfachung bei der Montage der Batterie, woraus sich wiederum eine Kostenersparnis ergibt. In besonderer Weise ist weiterhin eine Wärmeableitung von den Stromableiterfahnen zu der Kühlplatte verbessert, da die Stromableiterfahnen aufgrund fehlender stoffschlüssiger Verbindungen zur elektrischen Kontaktierung, wie beispielsweise Verschweißungen, eine ebene Oberfläche und somit eine große Wärmeübertragungsfläche aufweisen. Zusätzlich sind bei einer Verwendung einer zwischen den Stromableiterfahnen und der Kühlplatte eingebrachten Wärmeleitfolie aufgrund der ebenen Oberfläche der Stromableiterfahnen Beschädigungen der Wärmeleitfolie und somit elektrische Kurzschlüsse vermeidbar.

In zweckmäßiger Weise sind zur einfachen elektrischen Verbindung und Verpressung die Stromableiterfahnen einer Einzelzelle derart in entgegengesetzter Richtung um 90 Grad abgewinkelt, dass sich Stromableiterfahnen benachbarter Einzelzellen überlappen.

Zur Befestigung der Spannelemente weisen die Stromableiterfahnen und/oder die Kühlplatte zu den Spannelementen korrespondierende Aussparungen auf. Gemäß einer Weiterbildung der Erfindung umfassen die Spannelemente jeweils Schrauben, Niete und/oder Federelemente, so dass eine sichere Verspannung der Stromableiterfahnen mit der Kühlplatte und eine sichere elektrische Kopplung der Einzelzellen realisierbar sind.

Die Spannelemente sind jeweils aus einer Andruckleiste und Schrauben gebildet, wobei die Andruckleiste zu den Schrauben korrespondierende Gewindebohrungen aufweist. Dabei sind die Schrauben bevorzugt durch die Aussparungen der Kühlplatte und die Aussparungen der sich überlappenden Stromableiterfahnen in die Gewindebohrung der unterhalb der Stromableiterfahnen angeordneten Andruckleiste geführt. Aufgrund dieser Ausführung der Spannelemente ist durch eine gleichmäßige und flächige Krafteinleitung eine ebenfalls gleichmäßige und flächige Verpressung der Stromableiterfahnen mit der Kühlplatte sichergestellt, wobei die Verpressung und die elektrische Verschaltung der Stromableiterfahnen in besonders einfacher Weise in einem Arbeitsgang erzeugbar sind. Auch sind aufgrund der wieder zu öffnenden Spannelemente eine einfache Demontage der Batterie und somit ein einfacher Austausch und/oder eine Entsorgung von Einzelzellen möglich. Auch ist vor der Montage der Batterie, insbesondere vor einer Befestigung und Verpressung der Stromableiterfahnen an der Kühlplatte, durch diese Ausführung der Stromableiterfahnen eine Ausrichtung der Einzelzellen und somit ein Toleranzausgleich möglich.

Zur Verbesserung des Wärmeübergangs zwischen den Stromableiterfahnen und der Kühlplatte, welche insbesondere aus Metall gebildet ist, und zur elektrischen Isolation der Stromableiterfahnen von der Kühlplatte ist zwischen den Stromableiterfahnen und der Kühlplatte ein elektrisch isolierender Wärmeleitkörper oder eine elektrisch isolierende Wärmeleitfolie angeordnet.

Um im Bereich der Schrauben zwischen den Stromableiterfahnen und der Kühlplatte Deformierungen und Beschädigungen der Wärmeleitfolie aufgrund der Verpressung zu vermeiden, sind zusätzlich in vorteilhafter Weise zwischen den Stromableiterfahnen und der Kühlplatte Distanzelemente angeordnet. Die Distanzelemente weisen zweckmäßigerweise zu den Schrauben, den Aussparungen der Kühlplatte und den Aussparungen der Stromableiterfahnen korrespondierende Aussparungen auf. Ferner sind die Distanzelemente insbesondere aus einem mechanisch festen Material gebildet und derart dimensioniert, dass eine definierte Verpressung der zwischen den Stromableiterfahnen und der Kühlplatte angeordneten Wärmeleitfolie erfolgt.

Um auch einen elektrischen Kontakt und somit elektrische Kurzschlüsse zwischen den Spannelementen und den Stromableiterfahnen und/oder zwischen den Spannelementen und der Kühlplatte zu vermeiden, sind gemäß einer Weiterbildung der Erfindung elektrische Isolationselemente zwischen den Spannelementen und den Stromableiterfahnen und/oder zwischen den Spannelementen und der Kühlplatte angeordnet.

In einer vorteilhaften Ausgestaltung der Batterie weisen die Stromableiterfahnen zumindest im Überlappungsbereich eine Korrosionsschutz-Beschichtung auf, so dass eine Korrosion vermeidbar ist und daraus folgend ein konstanter elektrischer Übergangswiderstand zwischen den Stromableiterfahnen über die gesamte Lebensdauer der Batterie realisierbar ist.

Um weiterhin ein Eindringen von Fremdstoffen, insbesondere von Schmutzpartikeln und Feuchtigkeit, welche ebenfalls zu einer Erhöhung des elektrischen Übergangswiderstands und zu elektrischen Kurzschlüssen führen können, zu verhindern, sind die Stromableiterfahnen zumindest im Überlappungsbereich gegen ein Eindringen von Fremdstoffen abgedichtet. Hierzu sind insbesondere elektrisch isolierende Dichtelemente, Lackierungen, Silikone und/oder Vergussmassen vorgesehen.

Bevorzugt sind die Einzelzellen parallel zueinander angeordnet, so dass die Stromableiterfahnen der Einzelzellen in zumindest zwei Reihen angeordnet sind. Um ein Gewicht der Batterie zu minimieren und gleichzeitig eine effektive Kühlung der Einzelzellen sicherzustellen, ist jeder Reihe von Stromableiterfahnen jeweils eine Kühlplatte zugeordnet, welche sich insbesondere jeweils über die aus den sich überlappenden und in einer Reihe angeordneten Stromableiterfahnen bildende Oberfläche erstreckt.

Bei der Batterie handelt es sich gemäß einer Ausgestaltung der Erfindung um eine Fahrzeugbatterie, insbesondere eine Batterie für ein Fahrzeug mit Elektroantrieb, Hybridantrieb oder ein Brennstoffzellen-Fahrzeug. Vorzugsweise ist die Batterie eine Lithium-lonen-Batterie. Aufgrund des geringen Gewichts, der hohen Sicherheit und der verringerten Kosten eignet sich die Batterie vorzugsweise zur Anwendung in einem Fahrzeug.

Ausführungsbeispiele der Erfindung werden im Folgenden anhand von Zeichnungen näher erläutert.

Dabei zeigen:
- Fig. 1: schematisch eine Batterie mit einer Mehrzahl von Einzelzellen in einer perspektivischen Darstellung,
- Fig. 2: schematisch eine Explosionsdarstellung der Batterie gemäß Figur 1,
- Fig. 3: schematisch einen Zellverbund der Batterie gemäß Figur 1,
- Fig. 4: schematisch eine erste Explosionsdarstellung zweier benachbart angeordneter Einzelzellen der Batterie gemäß Figur 1,
- Fig. 5: schematisch eine zweite Explosionsdarstellung zweier benachbart angeordneter Einzelzellen der Batterie gemäß Figur 1,
- Fig. 6: schematisch einen Längsschnitt der Batterie gemäß Figur 1 im Bereich einer Kühlplatte und in einer Ebene von Spannelementen,
- Fig. 7: schematisch einen Längsschnitt der Batterie gemäß Figur 1 im Bereich der Kühlplatte und außerhalb der Ebene der Spannelemente,
- Fig. 8: schematisch einen Querschnitt der Batterie gemäß Figur 1 im Bereich der Kühlplatte und in der Ebene der Spannelemente,
- Fig. 9: schematisch eine Explosionsdarstellung einer Batterie mit zwischen der Kühlplatte und Stromableiterfahnen angeordneten Distanzelementen, und
- Fig. 10: schematisch einen Querschnitt der Batterie gemäß Figur 9 im Bereich der Kühlplatte und in der Ebene der Spannelemente.

Einander entsprechende Teile sind in allen Figuren mit den gleichen Bezugszeichen versehen.

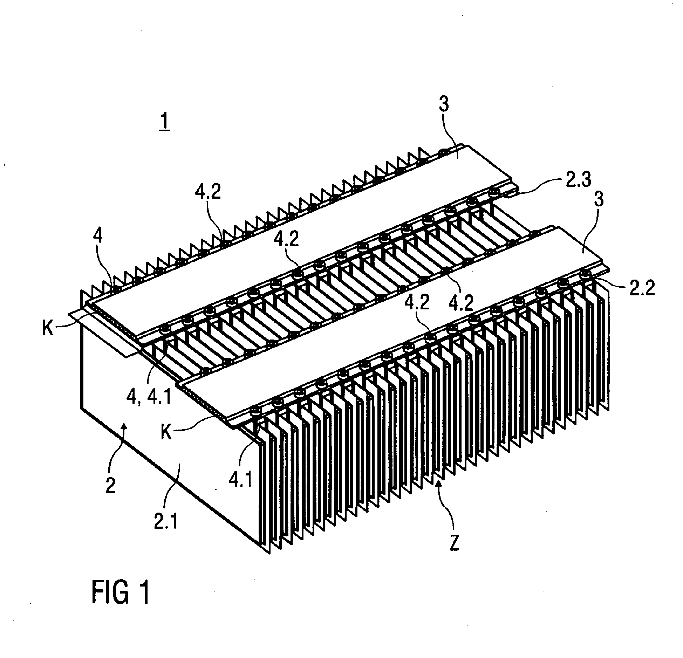

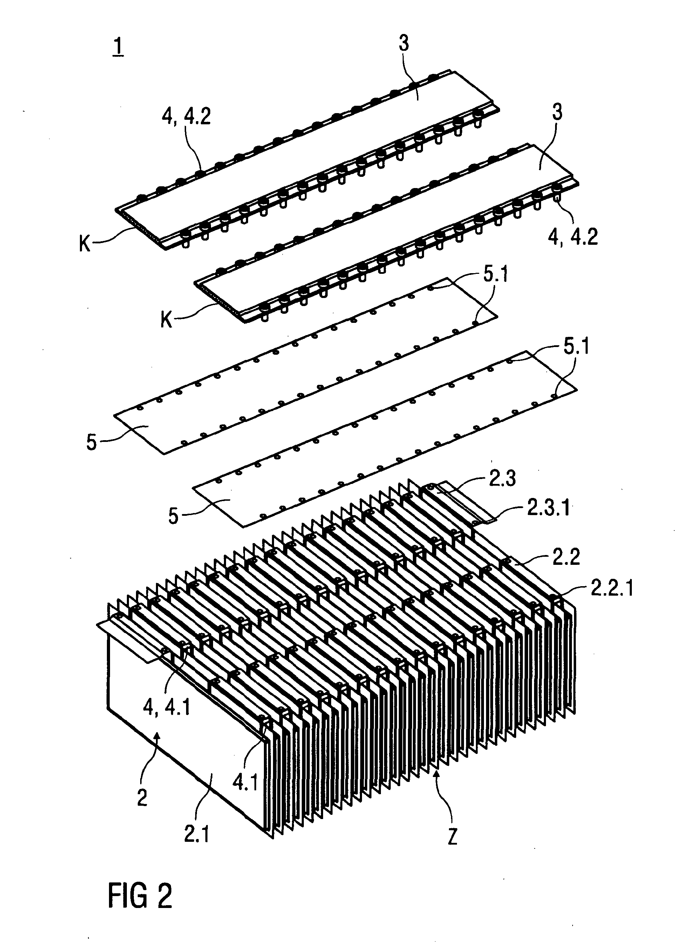

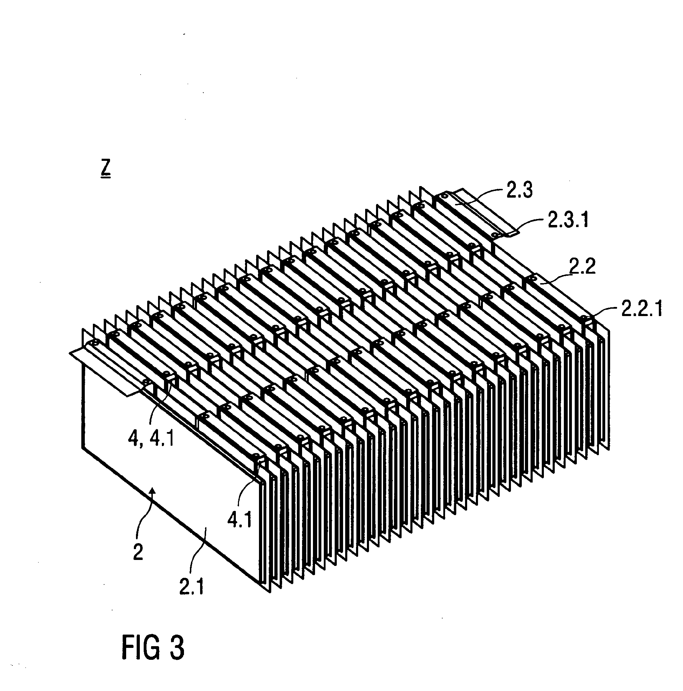

In den Figuren 1 und 2 ist eine Batterie 1 in verschiedenen Ansichten dargestellt. Die Batterie 1 umfasst dabei einen aus einer Mehrzahl von Einzelzellen 2 gebildeten und in Figur 3 dargestellten Zellverbund Z, wobei die Einzelzellen 2 elektrisch seriell und/oder parallel zu dem Zellverbund Z verschaltet sind.

Die Einzelzellen 2 sind als Flachzellen ausgebildet, welche in nicht näher dargestellter Weise im Zelleninneren jeweils einen Zellenkern aus aufeinander liegenden, elektrochemisch aktiven Folien aufweisen. Der Zellenkern der Einzelzellen 2 ist jeweils von einem Zellengehäuse 2.1 zumindest bereichsweise umgeben.

Im hier dargestellten Ausführungsbeispiel sind die Einzelzellen 2 so genannte Coffeebag- oder Pouch-Zellen, bei welchen das Zellengehäuse 2.1 aus einer dünnen, elektrisch isolierenden Folie gebildet ist, welche den Zellenkern umhüllt. Die isolierende Folie ist nach Evakuierung an einem umlaufenden Rand durch Folienschweißung verschlossen.

An einer oberen Kante der Einzelzelle 2 sind durch das Zellengehäuse 2.1 zwei Stromableiterfahnen 2.2, 2.3 hindurchgeführt und im Zellinneren mit jeweils einem elektrischen Pol des Zellenkerns der Einzelzelle 1 verbunden. Die Stromableiterfahnen 2.2, 2.3 sind aus einem wärmeleitfähigen und elektrisch leitfähigen Material, beispielsweise aus Kupfer, gebildet, so dass diese gleichzeitig zur elektrischen Verbindung der Einzelzellen 1 und zur Wärmeabfuhr einer während des Betriebs der Einzelzelle 2 erzeugten Verlustwärme aus dem Zelleninneren vorgesehen sind. Um eine Korrosion der Stromableiterfahnen 2.2, 2.3 zu vermeiden, sind diese zumindest teilweise mit einer Korrosionsschutz-Beschichtung, beispielsweise aus Nickel, Zinn oder Gold, versehen.

Zur Bildung des dargestellten Zellverbunds Z ist die Mehrzahl der Einzelzellen 2 parallel hintereinander angeordnet, wobei die Einzelzellen 2 zu einer seriellen Verschaltung abwechselnd in ihrer Längsachse um 180 Grad gedreht sind. Das heißt, dass jeweils ein negativer elektrischer Pol einer Einzelzelle 2 mit einem positiven elektrischen Pol einer nachfolgenden Einzelzelle 2 anhand der Stromableiterfahnen 2.2, 2.3 elektrisch verbunden ist. Bei einer elektrisch parallelen Verschaltung sind die Einzelzellen 2 jeweils in der gleichen Ausrichtung hintereinander angeordnet, so dass jeweils ein negativer elektrischer Pol einer Einzelzelle 2 mit einem negativen elektrischen Pol einer nachfolgenden Einzelzelle 2 und ein positiver elektrischer Pol der Einzelzelle 2 mit einem positiven Pol der nachfolgenden Einzelzelle 2 anhand der Stromableiterfahnen 2.2, 2.3 elektrisch verbunden sind.

Aufgrund dieser Anordnung der Einzelzellen 2 können für die Batterie 2 Einzelzellen 2 des gleichen Typs verwendet werden, da die jeweils parallel angeordneten Stromableiterfahnen 2.2, 2.3 benachbarter Einzelzellen 2 sowohl elektrisch seriell als auch parallel miteinander verbunden werden können. Da die Einzelzellen 2 parallel hintereinander angeordnet sind, sind die Stromableiterfahnen 2.2, 2.3 der Einzelzellen 2 im sich bildenden Zellverbund Z in zwei Reihen angeordnet.

Zur elektrischen Verbindung sind die Stromableiterfahnen 2.2, 2.3 der Einzelzellen 2 in entgegengesetzter Richtung um 90 Grad abgewinkelt, so dass sich jeweils Stromableiterfahnen 2.3, 2.3 benachbarter Einzelzellen 2 überlappen. Eine freie Stromableiterfahne 2.3 einer ersten Einzelzelle 2 des Zellverbunds Z und eine freie Stromableiterfahne 2.2 einer letzten Einzelzelle 2 des Zellverbunds Z dienen jeweils als Hochvoltkontakt der Batterie 1, wobei zu diesem Zweck jeweils eine der Stromableiterfahnen 2.2, 2.3 dieser Einzelzellen 2 verlängert ausgebildet ist. Die Hochvoltkontakte sind zur elektrischen Kopplung der Batterie 1 mit nicht näher dargestellten elektrischen Verbrauchern und/oder einem Bordnetz eines Fahrzeugs vorgesehen.

Um die Einzelzellen 2 gleichzeitig kraft- und/oder formschlüssig elektrisch zu verschalten und über die Stromableiterfahnen 2.2, 2.3 an einer diesen zugewandten Seite kraft- und/oder formschlüssig thermisch mit zwei Kühlplatten 3 zu verbinden, sind erfindungsgemäß Spannelemente 4 vorgesehen. Dabei ist jeder Reihe von Stromableiterfahnen 2.2, 2.3 jeweils eine Kühlplatte 3 zugeordnet, deren Breitenausdehnung der Breite der Stromableiterfahnen 2.2, 2.3 entspricht und deren Länge zumindest der Länge des Zellverbunds Z entspricht oder wie im dargestellten Ausführungsbeispiel größer als dieser ist.

Die Kühlplatten 3 sind insbesondere aus einem metallischen und gut wärmeleitfähigen Werkstoff gebildet. Um einen elektrischen Kontakt zwischen den Stromableiterfahnen 2.2, 2.3 und den Kühlplatten 3 und somit einen elektrischen Kurzschluss der Einzelzellen 2 zu vermeiden, ist zwischen den Reihen von Stromableiterfahnen 2.2, 2.3 und den Kühlplatten 3 jeweils eine Wärmeleitfolie 5 aus einem elektrisch isolierenden Material angeordnet, die die Kühlplatte 3 von den Stromableiterfahnen 2.2, 2.3 elektrisch isoliert und eine Wärmeübertragung zwischen den Einzelzellen 1 und der jeweiligen Kühlplatte 3 optimiert.

Zur Verspannung der Stromableiterfahnen 2.2, 2.3 an den Kühlplatten 3 und zur elektrischen Verschaltung der Stromableiterfahnen 2.2, 2.3 benachbarter Einzelzellen 2 umfassen die Spannelemente 4 im vorliegenden Ausführungsbeispiel jeweils eine Andruckleiste 4.1, welche unterhalb der sich überlappenden Stromableiterfahnen 2.2, 2.3 angeordnet ist.

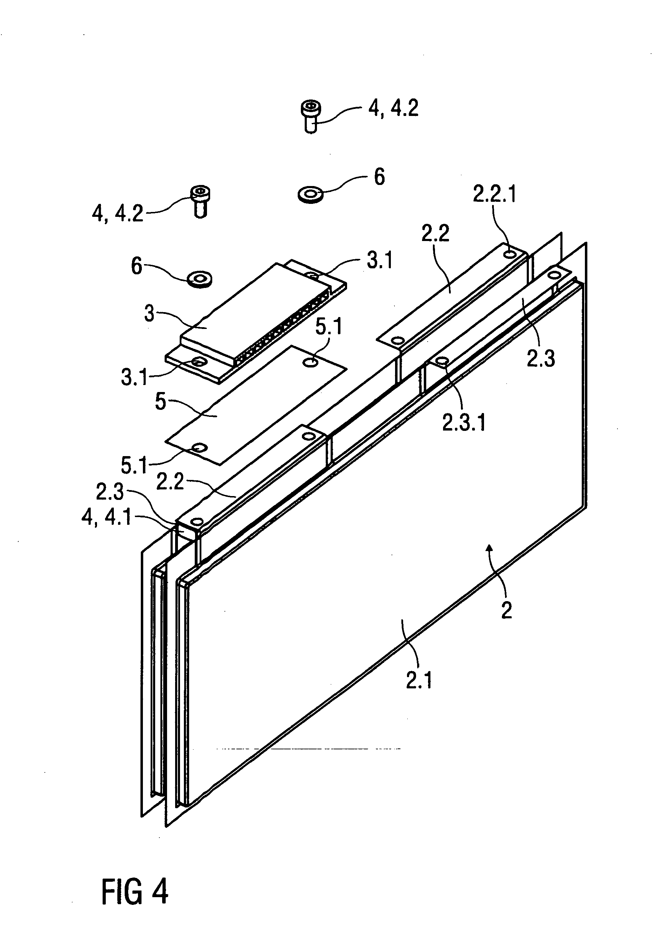

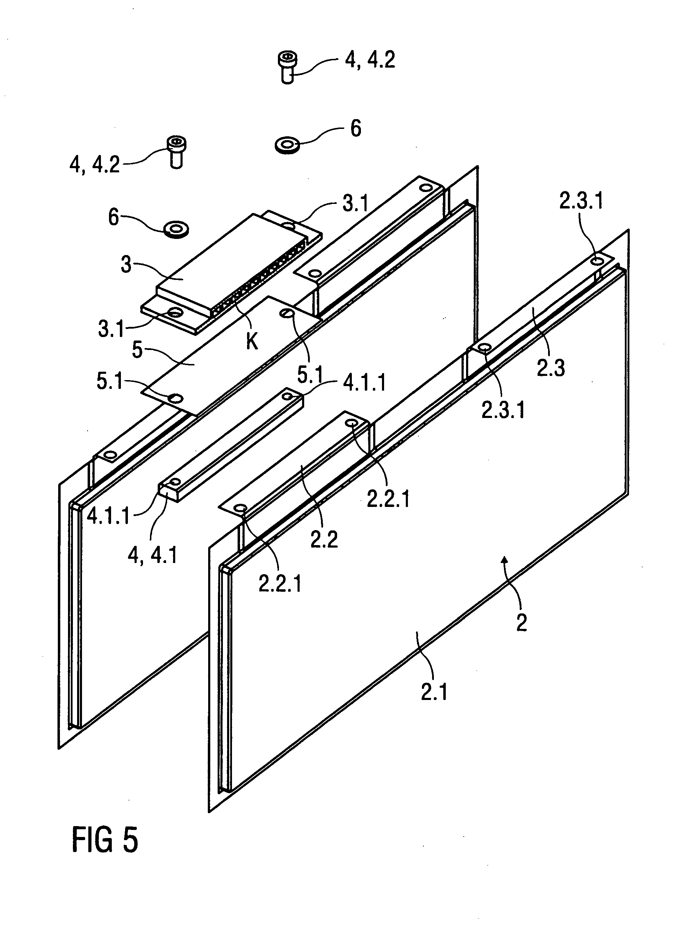

Zusätzlich umfassen die Spannelemente 4 jeweils zwei Schrauben 4.2, welche durch in Figur 4 näher dargestellte Aussparungen 3.1 der Kühlplatten 3 durch Aussparungen 5.1 der Wärmeleitfolien 5 und durch Aussparungen 2.2.1, 2.3.1 der sich überlappenden Stromableiterfahnen 2.2, 2.3 in in Figur 5 näher dargestellte Gewindebohrungen 4.1.1 der unterhalb der Stromableiterfahnen 2.2, 2.3 angeordneten Andruckleiste 4.2 geführt sind. In diesen Gewindebohrungen 4.1.1 sind die Schrauben 4.2 derart befestigt, dass die Stromableiterfahnen 2.2, 2.3 miteinander kraft- und formschlüssig elektrisch verbunden und an der jeweiligen Kühlplatte 3 kraft- und formschlüssig verpresst sind.

Ein besonderer Vorteil dieser Ausbildung der elektrischen und thermischen Verbindung ist, dass vor einem Festziehen der Schrauben 4.2 eine seitliche Verschiebbarkeit der Stromableiterfahnen 2.2, 2.3 zueinander möglich ist, so dass eventuelle Toleranzen der Einzelzellen 2 oder von deren Bauteilen ausgeglichen werden können.

Um einen Eintritt von Fremdstoffen, insbesondere von Feuchtigkeit und Schmutzpartikeln, in den Fügebereich zwischen den Stromableiterfahnen 2.2, 2.3 selbst und den Fügebereich zwischen den Stromableiterfahnen 2.2, 2.3 und der jeweiligen Kühlplatte 3 zu vermeiden, sind in nicht näher dargestellter Weise zusätzlich diese Fügebereiche durch Einbringen einer Vergussmasse, Aufbringen einer Lackierung und/oder Anordnen eines Dichtelements gegen dass Eindringen von Fremdstoffen geschützt.

Zur effizienten Kühlung der Einzelzellen 2 weisen die Kühlplatten 3 jeweils Kühlkanäle K zur Führung eines Kühlmediums auf. Bei dem Kühlmedium kann es sich sowohl um ein gasförmiges als auch um ein flüssiges Kühlmedium handeln. Da die Batterie 1 insbesondere eine Fahrzeugbatterie, vorzugsweise eine Batterie 1 für ein Fahrzeug mit Elektroantrieb, Hybridantrieb oder ein Brennstoffzellen-Fahrzeug, ist, ist es besonders vorteilhaft, wenn die Kühlplatten 3 der Batterie 1 in einen Kühlmittelkreislauf des Fahrzeugs, insbesondere einen Kältemittelkreislauf einer Fahrzeugsklimaanlage, eingebunden sind. Alternativ oder zusätzlich ist eine Kühlung mit Luft möglich.

Die Figuren 4 und 5 zeigen jeweils zwei benachbart angeordnete Einzelzellen 2 der Batterie 1 in verschiedenen Explosionsdarstellungen. Um einen elektrischen Kontakt der Schrauben 4.2 und ein Eindringen von Fremdstoffen in die Aussparungen 2.2.1, 2.3.1, der Stromableiterfahnen 2.2, 2.3, die Aussparungen 3.1 der Kühlplatten 3, die Aussparungen 5.1 der Wärmeleitfolie 5 und in die Gewindebohrungen 4.1 zu vermeiden, ist zwischen dem Schraubenkopf und einer Oberfläche der jeweiligen Kühlplatte 3 jeweils ein Isolationselement 6 angeordnet.

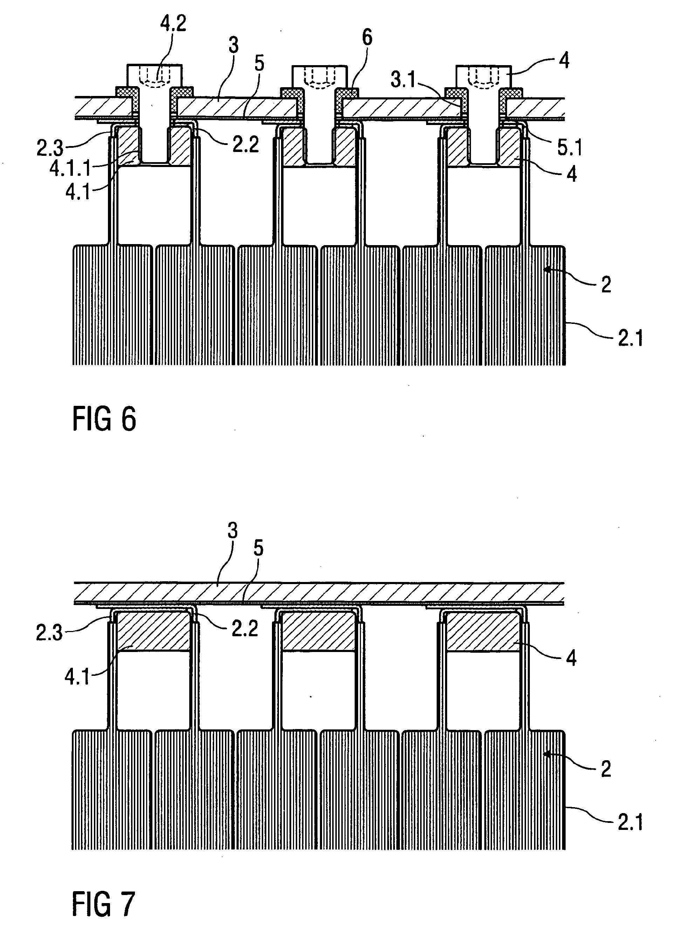

In Figur 6 ist ein Längsschnitt der Batterie 1 im Bereich der Kühlplatte 3 und in einer Ebene der Spannelemente 4 zur Verdeutlichung der Verpressung der Stromableiterfahnen 2.2, 2.3 mit der Kühlplatte 3, der elektrischen Verbindung der Stromableiterfahnen 2.2, 2.3 und des Aufbaus der Spannelemente 4 dargestellt.

Die Isolationselemente 6 sind, wie im dargestellten Ausführungsbeispiel gezeigt, derart ausgebildet und mittels der Schrauben 4.2 in die Aussparungen der Kühlplatte 3 gepresst, dass zwischen den Schrauben 4.2 und der Kühlplatte 3 kein elektrischer Kontakt möglich ist.

Figur 7 zeigt einen weiteren Längsschnitt der Batterie 1 im Bereich der Kühlplatte 3, jedoch außerhalb der Ebene der Spannelemente 4. Diese Schnittdarstellung verdeutlicht die formschlüssige Verbindung zwischen den Stromableiterfahnen 2.2, 2.3 selbst sowie zwischen den Stromableiterfahnen 2.2, 2.3 und der Kühlplatte 3, so dass sowohl ein geringer elektrischer Übergangswiderstand zwischen den Stromableiterfahnen 2.2, 2.3 als auch ein geringer thermischer Übergangswiderstand zwischen den Stromableiterfahnen 2.2, 2.3 und der Kühlplatte 3 erzeugbar sind. Auch werden große Strom tragende Flächen zwischen den Stromableiterfahnen 2.2, 2.3 sowie große Wärme übertragende Flächen zwischen den Stromableiterfahnen 2.2, 2.3 und der Kühlplatte 3 erzielt. Daraus resultieren in vorteilhafter Weise ein hoher elektrischer Wirkungsgrad und ein hoher Wirkungsgrad der Kühlung.

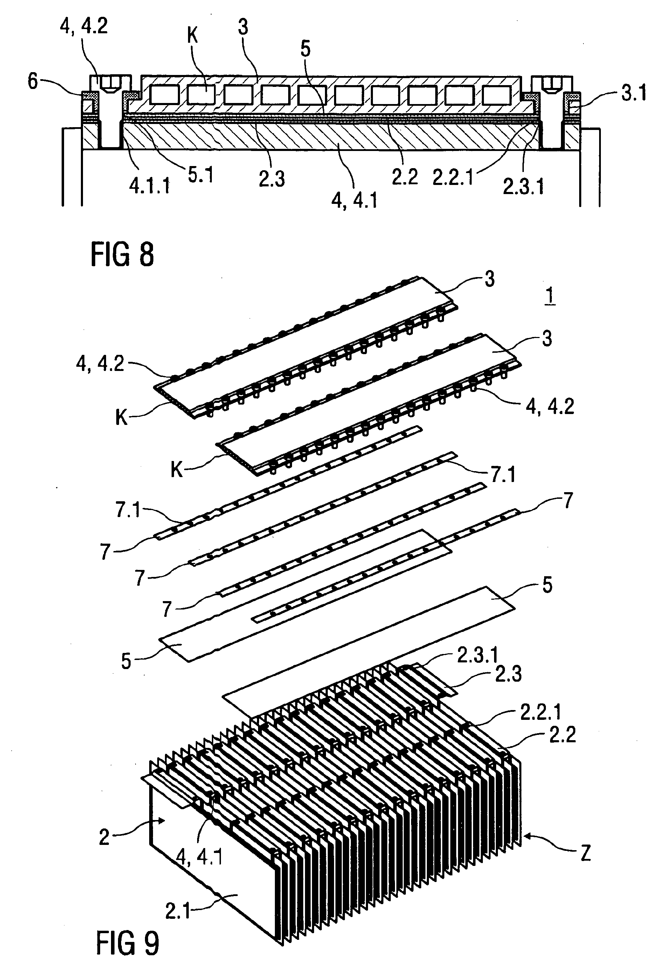

In Figur 8 ist ein Querschnitt der Batterie gemäß Figur 1 im Bereich einer der Kühlplatten 3 und in der Ebene der Spannelemente 4 in einer Detaildarstellung gezeigt, wobei eine Breite der Kühlplatte 3 genauso groß ist wie eine Breite der Stromableiterfahnen 2.2, 2.3.

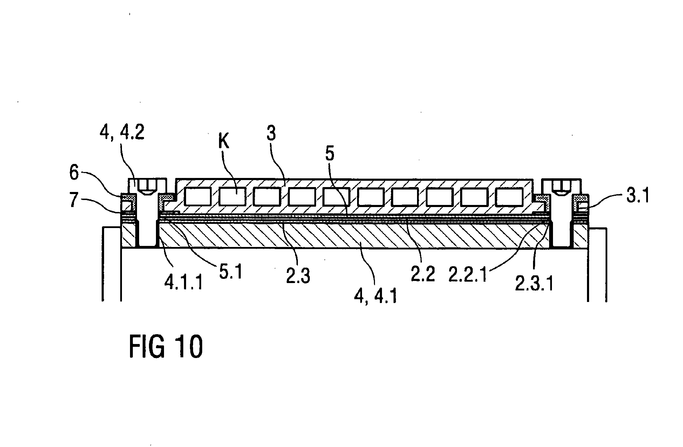

Figur 9 und Figur 10 zeigen die Batterie 1 mit mehreren Einzelzellen 2 in verschiedenen Ansichten.

Um im Bereich der Schrauben 4.2 zwischen den Stromableiterfahnen 2.2, 2.3 und der Kühlplatte 3 Deformierungen und Beschädigungen der Wärmeleitfolie 5 aufgrund der Verpressung zu vermeiden, sind zwischen den Stromableiterfahnen 2.2, 2.3 und der Kühlplatte 3 Distanzelemente 7 angeordnet. Die Distanzelemente 7 sind aus einem mechanisch festen und elektrisch isolierenden Material gebildet. Weiterhin weisen die Distanzelemente 7 zu den Schrauben 4.2, den Aussparungen 3.1 der Kühlplatte 3 und den Aussparungen 2.2.1, 2.3.1 der Stromableiterfahnen 2.2, 2.3 korrespondierende Aussparungen 7.1 auf, so dass die Schrauben 4.2 durch diese hindurchführbar sind.

Eine Dicke der Distanzelemente 7 ist dabei derart gewählt, dass eine definierte Verpressung der zwischen den Stromableiterfahnen 2.2, 2.3 und der Kühlplatte 3 angeordneten Wärmeleitfolie 5 erfolgt, d. h., dass diese nicht beschädigt ist. Die Wärmeleitfolie 5 erstreckt sich bei der Verwendung der Distanzelemente 7 im Bereich zwischen diesen.

## Patentansprüche

1. Batterie (1) mit einer Mehrzahl von seriell und/oder parallel miteinander verschalteten Einzelzellen (2) und zumindest einer polseitig auf den Einzelzellen (2) angeordneten Kühlplatte (3), wobei Stromableiterfahnen (2.2, 2.3) elektrischer Pole der Einzelzellen (2) thermisch mit der Kühlplatte (3) gekoppelt und derart abgewinkelt sind, dass diese parallel zur Kühlplatte (3) verlaufen,
**dadurch gekennzeichnet, dass**
Stromableiterfahnen (2.2, 2.3) benachbarter Einzelzellen (2) mittels Spannelementen (4) kraft- und/oder formschlüssig elektrisch verschaltet und kraft- und/oder formschlüssig mit der Kühlplatte (3) verpresst sind, dass die Spannelemente (4) jeweils aus einer Andruckleiste (4.1) und Schrauben (4.2) gebildet sind, wobei die Andruckleiste (4.1) zu den Schrauben (4.2) korrespondierende Gewindebohrungen (4.1.1) aufweist, und dass die Schrauben (4.2) durch die Aussparungen (3.1) der Kühlplatte (3) und die Aussparungen (2.2.1, 2.3.1) der sich überlappenden Stromableiterfahnen (2.2, 2.3) in die Gewindebohrung (4.1.1) der unterhalb der Stromableiterfahnen (2.2, 2.3) angeordneten Andruckleiste (4.1) geführt sind.

2. Batterie (1) nach Anspruch 1,
**dadurch gekennzeichnet, dass**
die Stromableiterfahnen (2.2, 2.3) einer Einzelzelle (2) derat in entgegengesetzter Richtung um 90 Grad abgewinkelt sind, dass sich Stromableiterfahnen (2.2, 2.3) benachbarter Einzelzellen (2) überlappen.

3. Batterie (1) nach Anspruch 1,
**dadurch gekennzeichnet, dass**
die Stromableiterfahnen (2.2, 2.3) zu den Spannelementen (4) korrespondierende Aussparungen (2.2.1, 2.3.1) aufweisen.

4. Batterie (1) nach Anspruch 1,
**dadurch gekennzeichnet, dass**
die Kühlplatte (3) zu den Spannelementen (4) korrespondierende Aussparungen (3.1) aufweist.

5. Batterie (1) nach Anspruch 1,
**dadurch gekennzeichnet, dass**
die Spannelemente (4) jeweils Schrauben (4.2), Niete und/oder Federelemente umfassen.

6. Batterie (1) nach Anspruch 1,
**dadurch gekennzeichnet, dass**
zumindest im Bereich der Schrauben (4.2) Distanzelemente (7) zwischen den Stromableiterfahnen (2.2, 2.3) und der Kühlplatte (3) angeordnet sind.

7. Batterie (1) nach Anspruch 6,
**dadurch gekennzeichnet, dass**
die Distanzelemente (7) zu den Schrauben (4.2), den Aussparungen (3.1) der Kühlplatte (3) und den Aussparungen (2.2.1, 2.3.1) der Stromableiterfahnen (2.2, 2.3) korrespondierende Aussparungen (7.1) aufweisen.

8. Batterie (1) nach Anspruch 1,
**dadurch gekennzeichnet, dass**
zwischen den Spannelementen (4) und den Stromableiterfahnen (2.2, 2.3) und/oder zwischen den Spannelementen (4) und der Kühlplatte (3) elektrische Isolationselemente (6) angeordnet sind.

9. Batterie (1) nach Anspruch 1,
**dadurch gekennzeichnet, dass**
die Stromableiterfahnen (2.2, 2.3) zumindest im Überlappungsbereich eine Korrosionsschutz-Beschichtung aufweisen.

10. Batterie (1) nach Anspruch 1,
**dadurch gekennzeichnet, dass**
die Stromableiterfahnen (2.2, 2.3) zumindest im Überlappungsbereich gegen ein Eindringen von Fremdstoffen abgedichtet sind.

11. Batterie (1) nach Anspruch 1,
**dadurch gekennzeichnet, dass**
zwischen den Stromableiterfahnen (2.2, 2.3) und der Kühlplatte (3) ein elektrisch isolierender Wärmeleitkörper oder eine elektrisch isolierende Wärmeleitfolie (5) angeordnet ist.

12. Batterie (1) nach Anspruch 1,
**dadurch gekennzeichnet, dass**
die Einzelzellen (2) parallel zueinander angeordnet sind, so dass die Stromableiterfahnen (2.2, 2.3) der Einzelzellen (2) in zumindest zwei Reihen angeordnet sind, wobei jeder Reihe von Stromableiterfahnen (2.2, 2.3) jeweils eine Kühlplatte (3) zugeordnet ist.

13. Batterie (1) nach Anspruch 1,
**dadurch gekennzeichnet, dass**
die Batterie (1) eine Fahrzeugbatterie, insbesondere eine Batterie (1) für ein Fahrzeug mit Elektroantrieb, Hybridantrieb oder ein Brennstoffzellen-Fahrzeug, ist.

## Claims

1. Battery (1) comprising a plurality of series- and/or parallel-connected individual cells (2) and at least one cooling plate (3) arranged on the pole side on the individual cells (2), wherein current drain lugs (2.2, 2.3) of electric poles of the individual cells (2) are thermally coupled to the cooling plate (3) and angled such that they are parallel to the cooling plate (3),
**characterised in that**
current drain lugs (2.2, 2.3) of adjacent individual cells (2) are non-positively and/or positively interconnected electrically by means of clamping elements (4) and are non-positively and/or positively pressed together with the cooling plate (3), **in that** each of the clamping elements (4) is represented by a pressing-on strip (4.1) and screws (4.2), the pressing-on strip (4.1) having threaded holes (4.1.1) matching the screws (4.2), and **in that** the screws (4.2) pass through the holes (3.1) of the cooling plate (3) and the holes (2.2.1, 2.3.1) of the overlapping current drain lugs (2.2, 2.3) into the threaded holes (4.1.1) of the pressing-on strip (4.1) located below the current drain lugs (2.2, 2.3).

2. Battery (1) according to claim 1,
**characterised in that**
the current drain lugs (2.2, 2.3) of an individual cell (2) are angled by 90 degrees in opposite directions in such a way that the current drain lugs (2.2, 2.3) of adjacent individual cells (2) overlap.

3. Battery (1) according to claim 1,
**characterised in that**
the current drain lugs (2.2, 2.3) have holes (2.2.1, 2.3.1) corresponding to the clamping elements (4).

4. Battery (1) according to claim 1,
**characterised in that**
the cooling plate (3) has holes (3.1) corresponding to the clamping elements (4).

5. Battery (1) according to claim 1,
**characterised in that**
each of the clamping elements (4) comprises screws (4.2), rivets and/or spring elements.

6. Battery (1) according to claim 1,
**characterised in that**
spacer elements (7) are located between the current drain lugs (2.2, 2.3) and the cooling plate (3) at least in the region of the screws (4.2).

7. Battery (1) according to claim 1,
**characterised in that**
the spacer elements (7) have holes (7.1) corresponding to the holes (3.1) of the cooling plate (3) and to the holes (2.2.1, 2.3.1) of the current drain lugs (2.2, 2.3).

8. Battery (1) according to claim 1,
**characterised in that**
electric insulation elements (6) are located between the clamping elements (4) and the current drain lugs (2.2, 2.3) and/or between the clamping elements (4) and the cooling plate (3).

9. Battery (1) according to claim 1,
**characterised in that**
the current drain lugs (2.2, 2.3) are provided with a corrosion protection coating at least in the overlapping region.

10. Battery (1) according to claim 1,
**characterised in that**
the current drain lugs (2.2, 2.3) are sealed against the ingress of foreign matter at least in the overlapping region.

11. Battery (1) according to claim 1,
**characterised in that**
an electrically insulating heat conducting body or an electrically insulating heat conducting foil (5) is located between the current drain lugs (2.2, 2.3) and the cooling plate (3).

12. Battery (1) according to claim 1,
**characterised in that**
the individual cells (2) are arranged parallel to one another, so that the current drain lugs (2.2, 2.3) of the individual cells (2) are arranged in at least two rows, a cooling plate (3) being assigned to each row of current drain lugs (2.2, 2.3).

13. Battery (1) according to claim 1,
**characterised in that**
the battery (1) is a vehicle battery, in particular a battery (1) for a vehicle with an electric drive or a hybrid drive or a fuel cell vehicle.

## Revendications

1. Batterie (1) dotée d'une pluralité d'éléments individuels (2) couplés entre eux en parallèle et/ou en série et d'au moins une plaque de refroidissement (3) disposée côté pôle sur les éléments individuels, des cosses de dérivation de courant (2.2, 2.3) de pôle électrique des éléments individuels (2) étant thermiquement couplés à la plaque de refroidissement (3) et étant coudés de manière à s'étendre parallèlement à la plaque de refroidissement (3), **caractérisée en ce que** des cosses de dérivation de courant (2.2, 2.3) des éléments individuels adjacents (2) sont électriquement connectés par complémentarité de forme et/ou par liaison de force au moyen d'éléments de serrage (4) et pressés par complémentarité de forme et/ou par liaison de force contre la plaque de refroidissement (3), **en ce que** chacun des éléments de serrage (4) est conçu à partir d'une baguette de pression (4.1) et de vis (4.2), la baguette de pression (4.1) présente des alésages filetés correspondants (4.1.1) aux vis (4.2), et **en ce que** les vis (4.2) sont guidées par les évidements (3.1) de la plaque de refroidissement (3) et les évidements (2.2.1, 2.3.1) des cosses de dérivation de courant superposées (2.2, 2.3) dans l'alésage fileté (4.1.1) de la baguette de pression (4.1) disposée sous les cosses de dérivation de courant (2.2, 2.3).

2. Batterie (1) selon la revendication 1, **caractérisée en ce que** les cosses de dérivation de courant (2.2, 2.3) d'un élément individuel (2) sont coudées à 90 degrés dans la direction opposée de manière que les cosses de dérivation de courant (2.2, 2.3) des éléments individuels adjacents (2) se superposent.

3. Batterie (1) selon la revendication 1, **caractérisée en ce que** les cosses de dérivation de courant (2.2, 2.3) présentent des évidements (2.2.1, 2.3.1) correspondants aux éléments de serrage (4).

4. Batterie (1) selon la revendication 1, **caractérisée en ce que** la plaque de refroidissement (3) présente des évidements (3.1) correspondants aux éléments de serrage (4).

5. Batterie (1) selon la revendication 1, **caractérisée en ce que** les éléments de serrage (4) comprennent à chaque fois des vis (4.2), des rivets et/ou des éléments-ressorts.

6. Batterie (1) selon la revendication 1, **caractérisée en ce qu'**au moins dans la région des vis (4.2) sont disposés des éléments d'écartement (7) entre les cosses de dérivation de courant (2.2, 2.3) et la plaque de refroidissement (3).

7. Batterie (1) selon la revendication 6, **caractérisée en ce que** les éléments d'écartement (7) présentent pour les vis (4.2) les évidements (3.1) de la plaque de refroidissement (3) et les évidements (7.1) correspondants aux évidements (2.2.1, 2.3.1) des cosses de dérivation de courant (2.2, 2.3).

8. Batterie (1) selon la revendication 1, **caractérisée en ce qu'**entre les éléments de serrage (4) et les cosses de dérivation de courant (2.2, 2,3) et/ou les éléments de serrage (4) et la plaque de refroidissement (3) sont disposés des éléments électriques isolants (6).

9. Batterie (1) selon la revendication 1, **caractérisée en ce que** les cosses de dérivation de courant (2.2, 2.3) présentent au moins dans la région de superposition un revêtement de protection contre la corrosion.

10. Batterie (1) selon la revendication 1, **caractérisée en ce que** les cosses de dérivation de courant (2.2, 2.3) sont étanches au moins dans la région de superposition à la pénétration de corps étrangers.

11. Batterie (1) selon la revendication 1, **caractérisé en ce qu'**entre les cosses de dérivation de courant (2.2, 2.3) et la plaque de refroidissement (3) est disposé un corps conducteur de chaleur électriquement isolant ou un film (5) conducteur de chaleur électriquement isolant.

12. Batterie (1) selon la revendication 1, **caractérisée en ce que** les éléments individuels (2) sont parallèles les uns aux autres de telle sorte que les cosses de dérivation de courant (2.2, 2.3) des éléments individuels (2) sont disposés au moins sur deux rangées, chaque rangée de cosses de dérivation de courant (2.2, 2.3) étant associée à chaque fois à une plaque de refroidissement (3).

13. Batterie (1) selon la revendication 1, **caractérisée en ce que** la batterie (1) est une batterie de véhicule automobile, en particulier une batterie (1) destinée à un véhicule automobile doté d'un moteur électrique ou un moteur hybride ou encore un véhicule automobile à piles à combustible.
